# EUROPEAN PATENT SPECIFICATION

(11) **EP 2 376 377 B1**
(45) Date of publication and mention of the grant of the patent: **02.08.2017**
(21) Application number: 09833864.3
(22) Date of filing: 18.12.2009
(51) Int. Cl.: C09D 5/24, C09D 11/52

(54) **INKS AND COATINGS CONTAINING MULTI-CHAIN LIPIDS**
TINTEN UND BESCHICHTUNGEN, DIE MEHRKETTIGE LIPIDE ENTHALTEN
ENCRES ET REVÊTEMENTS CONTENANT DES LIPIDES À CHAÎNES MULTIPLES

(30) Priority: 19.12.2008 US 138999 P
(43) Date of publication of application: 19.10.2011
(73) Proprietor: Vorbeck Materials Corp., Jessup, MD 20794 (US)
(72) Inventor: SCHEFFER, Dan, Frederick Maryland 21702 (US)
(74) Representative: dompatent von Kreisler Selting Werner - Partnerschaft von Patent- und Rechtsanwälten mbB
(86) International application number: PCT/US2009/068874
(87) International publication number: WO 2010/071858

(56) References cited:
- WO-A1-00/22050
- JP-A- S6 227 472
- US-A- 3 099 578
- US-A- 3 166 510
- US-A- 6 087 434
- US-A1- 2007 092 738
- US-A1- 2007 154 771
- US-A1- 2008 023 396
- US-A1- 2008 089 836
- US-A1- 2008 146 776
- US-A1- 2008 192 233
- US-A1- 2008 243 231
- US-A1- 2008 312 368
- US-B1- 6 168 656
- US-B1- 6 527 842
- US-B2- 7 423 082

## Description

### Field of the Invention

The present invention relates to inks and coatings that comprise at least one polymeric binder, at least one carbonaceous filler, and at least one multi-chain lipid.

### Background

The use of electrically conductive inks and coatings is rapidly expanding into many new areas, including electronics applications. Traditionally, though metals have been used in many of these applications, they can have disadvantages, including weight, cost, and that they can be difficult and/or inconvenient to form into a variety of shapes, including intricate parts. Many of these drawbacks can be overcome by the use of polymer based inks and coatings, which can not only have cost, weight, processability, and flexibility of design advantages over metals, but can be used in cases where metals would often be impractical, such to make flexible devices (like displays).

However, most polymeric materials are not intrinsically electrically or thermally conductive enough for many applications. Conductive polymeric resin compositions can be made in some cases by adding fillers to polymers, but high loadings are often required, which can be to the detriment of physical and other properties of the materials, as well as lead to melt processing difficulties when thermoplastic materials are used, among other possible drawbacks. Traditionally, electrically conductive inks and coatings have often relied on the additional of metal particles to impart conductivity, but the metals are often expensive, can be susceptible to oxidation, and can require the use of extra steps such as sintering for optimal conductivity. More recently, carbonaceous materials have been used for conductive inks and coatings, but in many cases they are insufficiently conductive for many applications. It would thus be desirable to obtain inks and coatings that contain carbonaceous additives and have enhanced electrical conductivity.

### Summary of the Invention

Disclosed and claimed herein is an ink or coating comprising at least one polymeric binder, at least one carbonaceous filler, and at least one multi-chain lipid. Further disclosed and claimed are articles formed from and/or comprising the ink or coating.

### Detailed Description of the Invention

The inks and coatings of the present invention comprise at least one polymeric binder, at least one carbonaceous filler, and at least one multi-chain lipid.

As used herein, the terms "ink" and "coating" encompasse materials in which the components are electrically conductive materials suspended and/or dissolved in a liquid, as well as pastes and materials in substantially solid form containing little or no liquids. They may be free-flowing, viscous, solid, powdery, etc.

The terms "ink" and "coating" refer to an ink or a coating in a form that is suitable for application to a substrate as well as the material after it is applied to the substrate, while it is being applied to the substrate, and both before and after any post-application treatments (such as evaporation, crosslinking, curing, and the like). The components of the ink or coating compositions and their proportions may vary during these stages.

By the term "multi-chain lipid" is meant a naturally-occurring or synthetic lipid having a polar head group and at least two nonpolar tail groups connected thereto. Examples of polar head groups include oxygen-, sulfur-, and halogen-containing, phosphates, amides, ammonium groups, amino acids (including α-amino acids), saccharides, polysaccharides, esters (Including glyceryl esters), zwitterionic groups, and the like.

The tail groups may be the same or different. Examples of tail groups include alkanes, alkenes, alkynes, aromatic compounds, etc. They may be hydrocarbons, functionalized hydrocarbons, and the like. The tail groups may be saturated or unsaturated. They may be linear or branched. The tail groups may be derived from fatty acids, such as oleic acid, palmitic acid, stearic acid, arachidic acid, erucic acid, arachadonic acid, linoleic acid, linolenic acid, oleic acid, and the like.

Examples of multi-chain lipids include, but are not limited to, lecithin and other phospholipids (such as phosphoglycerides (including phosphatidylserine, phosphatidylinositol, phosphatidylethanolamine (cephalin), and phospatidylglycerol and sphingomyelin); glycolipids (such as glucosyl-cerebroside); saccharolipids; sphingolipids (such as ceramides, di- and triglycerides, phosphosphingolipids, and glycosphingolipids); and the like. They may be amphoteric, including zwitterionic.

Preferred binders are polymeric binders. Polymeric binders can be thermoplastics or thermosets and may be elastomers. Binders may also comprise monomers that can be polymerized before, during, or after the application of the ink or coating to the substrate. Polymeric binders may be crosslinked or otherwise cured after the ink or coating has been applied to the substrate. Examples of polymeric binders include polysiloxanes (such as poly(dimethylsiloxane), dimethylsiloxane/vinylmethylsiloxane copolymers, vinyldimethylsiloxane terminated poly(dimethylsiloxane), etc.), polyethers such as poly(ethylene oxide)s (also known as poly(ethylene glycol)s), poly(propylene oxide)s (also known as poly(propylene glycol)s), and ethylene oxide/propylene oxide copolymers, cellulosic resins (such as ethyl cellulose, ethyl hydroxyethyl cellulose, carboxymethyl cellulose, cellulose acetate, cellulose acetate propionates, and cellulose acetate butyrates), poly(vinyl butyral, polyvinyl alcohol and its derivatives, ethylene/vinyl acetate polymers, acrylic polymers and copolymers, styrene/acrylic copolymers, styrene/maleic anhydride copolymers, isobutylene/maleic anhydride copolymers, vinyl acetate/ethylene copolymers, ethylene/acrylic acid copolymers, polyolefins, polystyrenes, olefin and styrene copolymers, epoxy resins, acrylic latex polymers, polyester acrylate oligomers and polymers, polyester diol diacrylate polymers, UV-curable resins, and polyamides, including polyamide polymers and copolymers (i.e., polyamides having at least two different repeat units) having melting points between about 120 and 255 °C (such as those sold under the trade names Macromelt by Henkel and Versamid by Cognis).

Suitable carbonaceous fillers include, but are not limited to, graphene sheets, graphite (including natural, Kish, and synthetic, pyrolytic, highly oriented pyrolytic, etc. graphites), graphitized carbon, carbon black, carbon fibers and fibrils, carbon whiskers, vapor-grown carbon nanofibers, metal coated carbon fibers, carbon nanotubes (including single- and multi-walled nanotubes), fullerenes, activated carbon, carbon fibers, expanded graphite, expandable graphite, graphite oxide, hollow carbon spheres, carbon foams, etc. Preferred fillers include graphene sheets, carbon black, and carbon nanotubes.

Preferred graphene sheets are graphite sheets preferably having a surface area of from about 100 to about 2630 m²/g. In some embodiments, the graphene sheets primarily, almost completely, or completely comprise fully exfoliated single sheets of graphite (these are approximately 1 nm thick and are often referred to as "graphene"), while in other embodiments, at least a portion of the graphene sheets may comprise at partially exfoliated graphite sheets, in which two or more sheets of graphite have not been exfoliated from each other. The graphene sheets may comprise mixtures of fully and partially exfoliated graphite sheets.

Graphene sheets may be made using any suitable method. For example, they may be obtained from graphite, graphite oxide, expandable graphite, expanded graphite, etc.. They may be obtained by the physical exfoliation of graphite, by for example, peeling off sheets graphene sheets. They may be made from inorganic precursors, such as silicon carbide. They may be made by chemical vapor deposition (such as by reacting a methane and hydrogen on a metal surface). They may be may by the reduction of an alcohol, such ethanol, with a metal (such as an alkali metal like sodium) and the subsequent pyrolysis of the alkoxide product (such a method is reported in Nature Nanotechnology (2009), 4, 30-33). They may be made by the exfoliation of graphite in dispersions or exfoliation of graphite oxide in dispersions and the subsequently reducing the exfoliated graphite oxide. Graphene sheets may be made by the exfoliation of expandable graphite, followed by intercalation, and ultrasonication or other means of separating the intercalated sheets (see, for example, Nature Nanotechnology (2008), 3, 538-542). They may be made by the intercalation of graphite and the subsequent exfoliation of the product in suspension, thermally, etc.

Graphene sheets may be made from graphite oxide (also known as graphitic acid or graphene oxide). Graphite may be treated with oxidizing and/or intercalating agents and exfoliated. Graphite may also be treated with intercalating agents and electrochemically oxidized and exfoliated. Graphene sheets may be formed by ultrasonically exfoliating suspensions of graphite and/or graphite oxide in a liquid (which may contain surfactants and/or intercalants). Exfoliated graphite oxide dispersions or suspensions can be subsequently reduced to graphene sheets. Graphene sheets may also be formed by mechanical treatment (such as grinding or milling) to exfoliate graphite or graphite oxide (which would subsequently be reduced to graphene sheets).

Reduction of graphite oxide to graphene may be by means of chemical reduction and may be carried out in graphite oxide in a solid form, in a dispersion, etc.. Examples of useful chemical reducing agents include, but are not limited to, hydrazines (such as hydrazine, *N*,*N*-dimethylhydrazine, etc.), sodium borohydride, hydroquinone, isocyanates (such as phenyl isocyanate), hydrogen, hydrogen plasma, etc.. A dispersion or suspension of exfoliated graphite oxide in a carrier (such as water, organic solvents, or a mixture of solvents) can be made using any suitable method (such as ultrasonication and/or mechanical grinding or milling) and reduced to graphene sheets.

Graphite oxide may be produced by any method known in the art, such as by a process that involves oxidation of graphite using one or more chemical oxidizing agents and, optionally, intercalating agents such as sulfuric acid. Examples of oxidizing agents include nitric acid, sodium and potassium nitrates, perchlorates, hydrogen peroxide, sodium and potassium permanganates, phosphorus pentoxide, bisulfites, etc. Preferred oxidants include KClO₄; HNO₃ and KClO₃; KMnO₄ and/or NaMnO₄; KMnO₄ and NaNO₃; K₂S₂O₈ and P₂O₅ and KMnO₄; KMnO₄ and HNO₃; and HNO₃. Preferred intercalation agents include sulfuric acid. Graphite may also be treated with intercalating agents and electrochemically oxidized. Examples of methods of making graphite oxide include those described by Staudenmaier (Ber. Stsch. Chem. Ges. (1898), 31, 1481) and Hummers (J. Am. Chem. Soc. (1958), 80, 1339).

One example of a method for the preparation of graphene sheets is to oxidize graphite to graphite oxide, which is then thermally exfoliated to form graphene sheets (also known as thermally exfoliated graphite oxide), as described in US 2007/0092432, the disclosure of which is hereby incorporated herein by reference. The thusly formed graphene sheets may display little or no signature corresponding to graphite or graphite oxide in their X-ray diffraction pattern.

The thermal exfoliation may be carried out in a continuous, semi-continuous batch, etc. process.

Heating can be done in a batch process or a continuous process and can be done under a variety of atmospheres, including inert and reducing atmospheres (such as nitrogen, argon, and/or hydrogen atmospheres). Heating times can range from under a few seconds or several hours or more, depending on the temperatures used and the characteristics desired in the final thermally exfoliated graphite oxide. Heating can be done in any appropriate vessel, such as a fused silica, mineral, metal, carbon (such as graphite), ceramic, etc. vessel. Heating may be done using a flash lamp.

During heating, the graphite oxide may be contained in an essentially constant location in single batch reaction vessel, or may be transported through one or more vessels during the reaction in a continuous or batch mode. Heating may be done using any suitable means, including the use of furnaces and infrared heaters.

Examples of temperatures at which the thermal exfoliation of graphite oxide may be carried out are at least about 300 °C, at least about 400 °C, at least about 450 °C, at least about 500 °C, at least about 600 °C, at least about 700 °C, at least about 750 °C, at least about 800 °C, at least about 850 °C, at least about 900 °C, at least about 950 °C, and at least about 1000 °C. Preferred ranges include between about 750 about and 3000 °C, between about 850 and 2500 °C, between about 950 and about 2500 °C, and between about 950 and about 1500 °C.

The time of heating can range from less than a second to many minutes. For example, the time of heating can be less than about 0.5 seconds, less than about 1 second, less than about 5 seconds, less than about 10 seconds, less than about 20 seconds, less than about 30 seconds, or less than about 1 min. The time of heating can be at least about 1 minute, at least about 2 minutes, at least about 5 minutes, at least about 15 minutes, at least about 30 minutes, at least about 45 minutes, at least about 60 minutes, at least about 90 minutes, at least about 120 minutes, at least about 150 minutes, at least about 240 minutes, from about 0.01 seconds to about 240 minutes, from about 0.5 seconds to about 240 minutes, from about 1 second to about 240 minutes, from about 1 minute to about 240 minutes, from about 0.01 seconds to about 60 minutes, from about 0.5 seconds to about 60 minutes, from about 1 second to about 60 minutes, from about 1 minute to about 60 minutes, from about 0.01 seconds to about 10 minutes, from about 0.5 seconds to about 10 minutes, from about 1 second to about 10 minutes, from about 1 minute to about 10 minutes, from about 0.01 seconds to about 1 minute, from about 0.5 seconds to about 1 minute, from about 1 second to about 1 minute, no more than about 600 minutes, no more than about 450 minutes, no more than about 300 minutes, no more than about 180 minutes, no more than about 120 minutes, no more than about 90 minutes, no more than about 60 minutes, no more than about 30 minutes, no more than about 15 minutes, no more than about 10 minutes, no more than about 5 minutes, no more than about 1 minute, no more than about 30 seconds, no more than about 10 seconds, or no more than about 1 second. During the course of heating, the temperature may vary.

Examples of the rate of heating include at least about 120 °C/min, at least about 200 °C/min, at least about 300 °C/min, at least about 400 °C/min, at least about 600 °C/min, at least about 800 °C/min, at least about 1000 °C/min, at least about 1200 °C/min, at least about 1500 °C/min, at least about 1800 °C/min, and at least about 2000 °C/min.

Graphene sheets may be annealed or reduced to graphene sheets having higher carbon to oxygen ratios by heating under reducing atmospheric conditions (e.g., in systems purged with inert gases or hydrogen). Reduction/annealing temperatures are preferably at least about 300 °C, or at least about 350 °C, or at least about 400 °C, or at least about 500 °C, or at least about 600 °C, or at least about 750 °C, or at least about 850 °C, or at least about 950 °C, or at least about 1000 °C. The temperature used may be, for example, between about 750 about and 3000 °C, or between about 850 and 2500 °C, or between about 950 and about 2500 °C.

The time of heating can be for example, at least about 1 second, or at least about 10 second, or at least about 1 minute, or at least about 2 minutes, or at least about 5 minutes. In some embodiments, the heating time will be at least about 15 minutes, or about 30 minutes, or about 45 minutes, or about 60 minutes, or about 90 minutes, or about 120 minutes, or about 150 minutes. During the course of annealing/reduction, the temperature may vary within these ranges.

The heating may be done under a variety of conditions, including in an inert atmosphere (such as argon or nitrogen) or a reducing atmosphere, such as hydrogen (including hydrogen diluted in an inert gas such as argon or nitrogen), or under vacuum. The heating may be done in any appropriate vessel, such as a fused silica or a mineral or ceramic vessel or a metal vessel. The materials being heated including any starting materials and any products or intermediates) may be contained in an essentially constant location in single batch reaction vessel, or may be transported through one or more vessels during the reaction in a continuous or batch reaction. Heating may be done using any suitable means, including the use of furnaces and infrared heaters.

The graphene sheets preferably have a surface area of at least about 100 m²/g to, or of at least about 200 m²/g, or of at least about 300 m²/g, or of least about 350 m²/g, or of least about 400 m²/g, or of least about 500 m²/g, or of least about 600 m²/g., or of least about 700 m²/g, or of least about 800 m²/g, or of least about 900 m²/g, or of least about 700 m²/g. The surface area may be about 400 to about 1100 m²/g. The theoretical maximum surface area can be calculated to be 2630 m²/g. The surface area includes all values and subvalues therebetween, especially including 400, 500, 600, 700, 800, 900, 1000, 1100, 1200, 1300, 1400, 1500, 1600, 1700, 1800, 1900, 2000, 2100, 2200, 2300, 2400, 2500, and 2630 m²/g.

The graphene sheets can have number average aspect ratios of about 100 to about 100,000, or of about 100 to about 50,000, or of about 100 to about 25,000, or of about 100 to about 10,000 (where "aspect ratio" is defined as the ratio of the longest dimension of the sheet to the shortest).

Surface area can be measured using either the nitrogen adsorption/BET method at 77 K or a methylene blue (MB) dye method in liquid solution.

The dye method is carried out as follows: A known amount of graphene sheets is added to a flask. At least 1.5 g of MB are then added to the flask per gram of graphene sheets. Ethanol is added to the flask and the mixture is ultrasonicated for about fifteen minutes. The ethanol is then evaporated and a known quantity of water is added to the flask to re-dissolve the free MB. The undissolved material is allowed to settle, preferably by centrifuging the sample. The concentration of MB in solution is determined using a UV-vis spectrophotometer by measuring the absorption at λₘₐₓ = 298 nm relative to that of standard concentrations.

The difference between the amount of MB that was initially added and the amount present in solution as determined by UV-vis spectrophotometry is assumed to be the amount of MB that has been adsorbed onto the surface of the graphene sheets. The surface area of the graphene sheets are then calculated using a value of 2.54 m² of surface covered per one mg of MB adsorbed.

The graphene sheets may have a bulk density of from about 0.1 to at least about 200 kg/m³. The bulk density includes all values and subvalues therebetween, especially including 0.5, 1, 5, 10, 15, 20, 25, 30, 35, 50, 75, 100, 125, 150, and 175 kg/m³.

The graphene sheets may be functionalized with, for example, oxygen-containing functional groups (including, for example, hydroxyl, carboxyl, and epoxy groups) and typically have an overall carbon to oxygen molar ratio (C/O ratio), as determined by elemental analysis of at least about 1:1, or more preferably, at least about 3:2.

Examples of carbon to oxygen ratios include about 3:2 to about 85:15; about 3:2 to about 20:1; about 3:2 to about 30:1; about 3:2 to about 40:1; about 3:2 to about 60:1; about 3:2 to about 80:1; about 3:2 to about 100:1; about 3:2 to about 200:1; about 3:2 to about 500:1; about 3:2 to about 1000:1; about 3:2 to greater than 1000:1; about 10:1 to about 30:1; about 80:1 to about 100:1; about 20:1 to about 100:1; about 20:1 to about 500:1; about 20:1 to about 1000:1; about 50:1 to about 300:1; about 50:1 to about 500:1; and about 50:1 to about 1000:1. In some embodiments, the carbon to oxygen ratio is at least about 10:1, or at least about 20:1, or at least about 35:1, or at least about 50:1, or at least about 75:1, or at least about 100:1, or at least about 200:1, or at least about 300:1, or at least about 400:1, or at least 500:1, or at least about 750:1, or at least about 1000:1; or at least about 1500:1, or at least about 2000:1. The carbon to oxygen ratio also includes all values and subvalues between these ranges.

The graphene sheets may contain atomic scale kinks. These kinks may be caused by the presence of lattice defects in, or by chemical functionalization of the two-dimensional hexagonal lattice structure of the graphite basal plane.

In one embodiment of the invention, the weight ratio of lipids to carbonaceous filler is preferably from about 10:1 to about 1:10, or more preferably from about 5:1 to about 1:5, or yet more preferably from about 2:1 to about 1:2.

In one embodiment of the invention, the carbonaceous fillers are preferably present in the inks and coatings in about 3 weight percent to about 75 weight percent, or more preferably in about 5 weight percent to about 60 weight percent, or yet more in about 10 weight percent to about 50 weight percent, based on the total weight of the ink or coating where the weight percentages are based on the total weight of the coating after it has been applied to a substrate and subjected to any post-application treatments (such drying, curing, crosslinking, etc.). However, as will be appreciated by those skilled in the art, the amount of carbonaceous filler present in the inks and coatings can be selected based on the desired properties and the particular binders and other optional components chosen.

The inks and coatings may optionally comprise one or more carriers in which some or all of the components are dissolved, suspended, or otherwise dispersed or carried. Examples of suitable carriers include, but are not limited to, water, distilled or synthetic isoparaffinic hydrocarbons (such Isopar® and Norpar® (both manufactured by Exxon) and Dowanol® (manufactured by Dow), citrus terpenes and mixtures containing citrus terpenes (such as Purogen, Electron, and Positron (all manufactured by Ecolink)), terpenes (including terpineols, including alpha-terpineol), limonene, aliphatic petroleum distillates, alcohols (such as methanol, ethanol, *n*-propanol, *i*-propanol, *n*-butanol, *i-*butanol, sec-butanol, *tert*-butanol, diacetone alcohol, butyl glycol, etc.), ketones (such as acetone, methyl ethyl ketone, cyclohexanone, *i*-butyl ketone, 2,6,8,trimethyl-4-nonanone etc.), esters (such as methyl acetate, ethyl acetate, *n*-propyl acetate, *i*-propyl acetate, *n-*butyl acetate, *i*-butyl acetate, carbitol acetate, etc.), glycol ethers (such as propylene glycol monomethyl ether and other propylene glycol ethers, ethylene glycol monobutyl ether and other ethylene glycol ethers, ethylene and propylene glycol ether acetates), Hexasol™ (supplied by SpecialChem), *N*-methyl-2-pyrrolidone, and mixtures of two or more of the foregoing and mixtures of one or more of the foregoing with other carriers. Preferred solvents include low- or non-VOC solvents, non-hazardous air pollution solvents, and non-halogenated solvents.

The inks and coatings may optionally comprise one or more additional additives, such as dispersion aids (including surfactants, emulsifiers, and wetting aids), adhesion promoters, thickening agents (including clays), defoamers and antifoamers, biocides, additional fillers, flow enhancers, stabilizers, crosslinking and curing agents, and the like.

Examples of dispersing aids include glycol ethers (such as poly(ethylene oxide), block copolymers derived from ethylene oxide and propylene oxide (such as those sold under the trade name Pluronic® by BASF), acetylenic diols (such as 2,5,8,11-tetramethyl-6-dodecyn-5,8-diol ethoxylate and others sold by Air Products under the trade names Surfynol® and Dynol®), salts of carboxylic acids (including alkali metal and ammonium salts), and polysiloxanes.

Examples of grinding aids include stearates (such as Al, Ca, Mg, and Zn stearates) and acetylenic diols (such as those sold by Air Products under the trade names Surfynol® and Dynol®).

Examples of adhesion promoters include titanium chelates and other titanium compounds such as titanium phosphate complexes (including butyl titanium phosphate), titanate esters, diisopropoxy titanium bis(ethyl-3-oxobutanoate, isopropoxy titanium acetylacetonate, and others sold by Johnson-Matthey Catalysts under the trade name Vertec.

Examples of thickening agents include glycol ethers (such as poly(ethylene oxide), block copolymers derived from ethylene oxide and propylene oxide (such as those sold under the trade name Pluronic® by BASF), long-chain carboxylate salts (such aluminum, calcium, zinc, etc. salts of stearates, oleats, palmitates, etc.), aluminosilicates (such as those sold under the Minex® name by Unimin Specialty Minerals and Aerosil® 9200 by Evonik Degussa), fumed silica, natural and synthetic zeolites, etc.

The inks and coatings used in the present invention may optionally contain additional electrically conductive components other than the carbonaceous fillers, such as metals (including metal alloys), conductive metal oxides, polymers, carbonaceous materials other than the graphene sheets, and metal-coated materials. These components can take a variety of forms, including particles, powders, flakes, foils, needles, etc.

Examples of metals include, but are not limited to silver, copper, aluminum, platinum, palladium, nickel, chromium, gold, bronze, colloidal metals, etc. Examples of metal oxides include antimony tin oxide and indium tin oxide and materials such as fillers coated with metal oxides. Metal and metal-oxide coated materials include, but are not limited to metal coated carbon and graphite fibers, metal coated glass fibers, metal coated glass beads, metal coated ceramic materials (such as beads), and the like. These materials can be coated with a variety of metals, including nickel.

Examples of electrically conductive polymers include, but are not limited to, polyacetylene, polyethylene dioxythiophene (PEDOT), poly(styrenesulfonate) (PSS), PEDOT:PSS copolymers, polythiophene and polythiophenes, poly(3-alkylthiophenes), poly(2,5-bis(3-tetradecylthiophen-2-yl)thieno[3,2-b]thiophene) (PBTTT), poly(phenylenevinylene), polypyrene, polycarbazole, polyazulene, polyazepine, polyflurorenes, polynaphthalene, polyisonaphthalene, polyaniline, polypyrrole, poly(phenylene sulfide), copolymers of one or more of the foregoing, etc., and their derivatives and copolymers. The conductive polymers may be doped or undoped. They may be doped with boron, phosphorous, iodine, etc.

In one embodiment of the invention, the inks and coatings preferably have a electrical conductivity of at least about 10⁻⁸ S/cm. In an embodiment of the invention they preferably have a conductivity of about 10⁻⁸ S/cm to about 10³ S/cm, or more preferably of about 10⁻⁷ S/cm to about 10³ S/cm. In another embodiment of the invention, the inks and coatings preferably have a conductivity of at least about 10² S/cm, or more preferably at least about 10³ S/cm, or yet more preferably at least about 10⁴ S/cm. They may have a conductivity of about 10⁻⁶ S/m to about 10⁵ S/m, or of about 10⁻⁵ S/m to about 10⁵ S/m. In other embodiments of the invention, the inks and coatings have conductivities of at least about 0.001 S/m, of at least about 0.01 S/m, of at least about 0.1 S/m, of at least about 1 S/m, of at least about 10 S/m, of at least about 100 S/m, or at least about 1000 S/m, or at least about 10⁴ S/m, or at least about 10⁵ S/m, or at least about 10⁶ S/m. The conductivities of the inks and coatings are determined after they have been applied to a substrate and subjected to any post-application treatments (such drying, curing, cross-linking, etc.).

The inks and coatings may be made using any suitable method, including wet or dry methods and batch, semi-continuous, and continuous methods.

For example, components of the inks and coatings, such as two or more of the graphene sheets, binders, carriers, and/or other components may be blended by using suitable mixing, dispersing, and/or compounding techniques and apparatus, including ultrasonic devices, high-shear mixers, two-roll mills, three-roll mills, cryogenic grinding crushers, extruders, kneaders, double planetary mixers, triple planetary mixers, high pressure homogenizers, ball mills, attrition equipment, sandmills, and horizontal and vertical wet grinding mills, and the like.

The resulting blends may be further processed by grinding using wet or dry grinding technologies. The technologies can be continuous or discontinuous. Examples include ball mills, attrition equipment, sandmills, and horizontal and vertical wet grinding mills. Suitable materials for use as grinding media include metals, carbon steel, stainless steel, ceramics, stabilized ceramic media (such as yttrium stabilized zirconium oxide), PTFE, glass, tungsten carbide, and the like.

After blending and/or grinding steps, additional components may be added to the inks and coatings, including, but not limited to, thickeners, viscosity modifiers, and the like. The inks and coatings may also be diluted by the addition of more carrier.

The inks and coatings may be applied to a wide variety of substrates, including, but not limited to, flexible and/or stretchable materials, silicones and other elastomers and other polymeric materials, metals (such as aluminum, copper, steel, stainless steel, etc.), fabrics (including cloths) and textiles (such as cotton, wool, polyesters, rayon, etc.), clothing, glasses and other minerals, ceramics, silicon surfaces, wood, paper, cardboard, cellulose-based materials, labels, silicon and other semiconductors, laminates, corrugated materials, concrete, bricks, and other building materials, etc. The substrates may have been treated with other coatings (such as paints) or similar materials before the inks and coatings are applied. Examples include substrates (such as PET) coated with indium tin oxide, antimony tin oxide, etc. They may be woven, nonwoven, in mesh form, etc.

Examples of polymeric substrate materials include, but are not limited to, those comprising thermoplastics and thermosets, including elastomers and rubbers (including thermoplastics and thermosets), silicones, fluorinated polysiloxanes, natural rubber, butyl rubber, chlorosulfonated polyethylene, chlorinated polyethylene, styrene/butadiene copolymers (SBR), styrene/ethylene/butadiene/stryene copolymers (SEBS), styrene/ethylene/butadiene/stryene copolymers grafted with maleic anhydride, styrene/isoprene/styrene copolymers (SIS), polyisoprene, nitrile rubbers, hydrogenated nitrile rubbers, neoprene, ethylene/propylene copolymers (EPR), ethylene/propylene/diene copolymers (EPDM), ethylene/vinyl acetate copolymer (EVA), hexafluoropropylene/vinylidene fluoride/tetrafluoroethylene copolymers, tetrafluoroethylene/propylene copolymers, fluorelastomers, polyesters (such as poly(ethylene terephthalate), poly(butylene terephthalate), poly(ethylene naphthalate), liquid crystalline polyesters, poly(lactic acid), etc).; polystyrene; polyamides (including polyterephthalamides); polyimides; aramids (such as Kevlar® and Nomex®); fluoropolymers (such as fluorinated ethylene propylene (FEP), polytetrafluoroethylene (PTFE), poly(vinyl fluoride), poly(vinylidene fluoride), etc.); polyetherimides; poly(vinyl chloride); poly(vinylidene chloride); polyurethanes (such as thermoplastic polyurethanes (TPU); spandex, cellulosic polymers; styrene/acrylonitriles polymers (SAN); arcrylonitrile/butadiene/styrene polymers (ABS); polycarbonates; polyacrylates; poly(methyl methacrylate); ethylene/vinyl acetate copolymers; thermoset epoxies and polyurethanes; polyolefins (such as polyethylene (including low density polyethylene, high density polyethylene, ultrahigh molecular weight polyethylene, etc.), polypropylene (such as biaxially-oriented polypropylene, etc.); Mylar; etc. They may be non-woven materials, such as DuPont Tyvek®.

The substrate may be a transparent or translucent or optical material, such as glass, quartz, polymer (such as polycarbonate or poly(meth)acrylates (such as poly(methyl methacrylate)).

The inks and coatings may be applied to the substrate using any suitable method, including, but not limited to, painting, pouring, spin casting, solution casting, dip coating, powder coating, by syringe or pipette, spray coating, curtain coating, lamination, co-extrusion, electrospray deposition, ink-jet printing, spin coating, thermal transfer (including laser transfer) methods, doctor blade printing, screen printing, rotary screen printing, gravure printing, capillary printing, offset printing, electrohydrodynamic (EHD) printing (a method of which is described in WO 2007/053621, which is hereby incorporated herein by reference), flexographic printing, pad printing, stamping, xerography, microcontact printing, dip pen nanolithography, laser printing, via pen or similar means, etc. The inks and coatings can be applied in multiple layers.

After they have been applied to a substrate, the inks and coatings may be cured using any suitable technique, including drying and oven-drying (in air or another inert or reactive atmosphere), UV curing, IR curing, microwave curing or drying, sintering, and the like.

When applied to a substrate, the inks and coatings can have a variety of forms. They can be present as a film or lines, patterns, letters, numbers, circuitry, logos, identification tags, and other shapes and forms. The coatings may be covered with additional material, such as overcoatings, varnishes, polymers, fabrics, etc.

When applied to a substrate, the inks and coatings can have a variety of thicknesses. In one embodiment of the invention, when applied to a substrate the coating can preferably have a thickness of at least about 2 nm, or more preferably at least about 5 nm. In various embodiments of the invention, the coatings can have a thickness of about 2 nm to 2 mm, about 5 nm to 1 mm, about 2 nm to about 100 nm, about 2 nm to about 200 nm, about 2 nm to about 500 nm, about 2 nm to about 1 micrometer, about 5 nm to about 200 nm, about 5 nm to about 500 nm, about 5 nm to about 1 micrometer, about 5 nm to about 50 micrometers, about 5 nm to about 200 micrometers, about 10 nm to about 200 nm, about 50 nm to about 500 nm, about 50 nm to about 1 micrometer, about 1 micrometer to about 2 mm, about 1 micrometer to about 1 mm, about 1 micrometer to about 500 micrometers, about 1 micrometer to about 200 micrometers, about 1 micrometer to about 100 micrometers, about 50 micrometers to about 1 mm, about 100 micrometers to about 2 mm, about 100 micrometers to about 1 mm, about 100 micrometers to about 750 micrometers, about 100 micrometers to about 500 micrometers, about 500 micrometers to about 2 mm, or about 500 micrometers to about 1 mm.

The inks and coatings can be applied to the same substrate in varying thicknesses at different points and can be used to build up three-dimensional structures on the substrate.

The inks and coatings can be used for the passivation of surfaces, such as metal (e.g. steel, aluminum, etc.) surfaces, including exterior structures such as bridges and buildings. Examples of other uses of the inks and coatings include: UV radiation resistant coatings, abrasion resistant coatings, coatings having permeation resistance to liquids (such as hydrocarbon, alcohols, water, etc.) and/or gases, electrically conductive coatings, static dissipative coatings, and blast and impact resistant coatings. They can be used to make fabrics having electrical conductivity. The coatings can be used in solar cell applications; solar energy capture applications; signage, flat panel displays; flexible displays, including light-emitting diode, organic light-emitting diode, and polymer light-emitting diode displays; backplanes and frontplanes for displays; and lighting, including electroluminescent and OLED lighting. The displays may be used as components of portable electronic devices, such as computers, cellular telephones, games, GPS receivers, personal digital assistants, music players, games, calculators, artificial "paper" and reading devices, etc.

They may be used in packaging and/or to make labels. They may be used in inventory control and anti-counterfeiting applications (such as for pharmaceuticals), including package labels. They may be used to make smart packaging and labels (such as for marketing and advertisement, information gathering, inventory control, information display, etc.). They may be used to form a Faraday cage in packaging, such as for electronic components.

The inks and coatings can be used on electrical and electronic devices and components, such as housings etc., to provide EMI shielding properties. They made be used in microdevices (such as microelectromechanical systems (MEMS) devices) including to provide antistatic coatings.

They may be used in the manufacture of housings, antennas, and other components of portable electronic devices, such as computers, cellular telephones, games, navigation systems, personal digital assistants, music players, games, calculators, radios, artificial "paper" and reading devices, etc.

The inks and coatings can be used to form thermally conductive channels on substrates or to form membranes having desired flow properties and porosities. Such materials could have highly variable and tunable porosities and porosity gradients can be formed. The coatings can be used to form articles having anisotropic thermal and/or electrical conductivities. The coatings can be used to form three-dimensional printed prototypes.

The inks and coatings can be used to make printed electronic devices (also referred to as "printed electronics) that may be in the form of complete devices, parts or sub elements of devices, electronic components, etc. They comprise a substrate onto at least one surface of which has been applied a layer of an electrically conductive ink comprising graphene sheets and at least one binder.

Printed electronics may be prepared by applying the inks and coatings to a substrate in a pattern comprising an electrically conductive pathway designed to achieve the desired electronic device. The pathway may be solid, mostly solid, in a liquid or gel form, etc. The ink may further optionally comprise a carrier other than a binder. When the ink has been applied to the substrate, all or part of the carrier may be removed to form the electrically conductive pathway. The binder may be cured or cross-linked after the ink has been applied to the substrate.

The printed electronic devices may take on a wide variety of forms and be used in a large array of applications. They may contain multiple layers of electronic components (e.g. circuits) and/or substrates. All or part of the printed layer(s) may be covered or coated with another material such as a cover coat, varnish, cover layer, cover films, dielectric coatings, electrolytes and other electrically conductive materials, etc. There may also be one or more materials between the substrate and printed circuits. Layers may include semiconductors, metal foils, and dielectric materials.

The printed electronics may further comprise additional components, such as processors, memory chips, other microchips, batteries, resistors, diodes, capacitors, transistors, etc.

Other applications include, but are not limited to: passive and active devices and components; electrical and electronic circuitry, integrated circuits; flexible printed circuit boards; transistors; field-effect transistors; microelectromechanical systems (MEMS) devices; microwave circuits; antennas; diffraction gratings; indicators; chipless tags (e.g. for theft deterrence from stores, libraries, etc.); smart cards; sensors; liquid crystalline displays (LCDs); signage; lighting; flat panel displays; flexible displays, including light-emitting diode, organic light-emitting diode, and polymer light-emitting diode displays; backplanes and frontplanes for displays; electroluminescent and OLED lighting; photovoltaic devices, including backplanes; product identifying chips and devices; batteries, including thin film batteries; electrodes; indicators; printed circuits in portable electronic devices (for example, cellular telephones, computers, personal digital assistants, global positioning system devices, music players, games, calculators, etc.); electronic connections made through hinges or other movable/bendable junctions in electronic devices such as cellular telephones, portable computers, folding keyboards, etc.); wearable electronics; and circuits in vehicles, medical devices, diagnostic devices, instruments, etc.

The electronic devices may be radiofrequency identification (RFID) devices and/or components thereof and/or radiofrequency communication device. Examples include, but are not limited to, RFID tags, chips, and antennas. The RFID devices may be ultrahigh frequency RFID devices, which typically operate at frequencies in the range of about 868 to about 928 MHz. Examples of uses for RFIDs are for tracking shipping containers, products in stores, products in transit, and parts used in manufacturing processes; passports; barcode replacement applications; inventory control applications; pet identification; livestock control; contactless smart cards; automobile key fobs; etc.

The electronic devices may also be elastomeric (such as silicone) contact pads and keyboards. Such devices can be used in portable electronic devices, such as calculators, cellular telephones, GPS devices, keyboards, music players, games, etc. They may also be used in myriad other electronic applications, such as remote controls, touch screens, automotive buttons and switches, etc.

### Examples

### Preparation of test samples

Liquid dispersions are printed onto a substrate using a doctor blade and then dried in air in an oven at 125 °C to form a film. Testing is done on the printed films (coatings).

### Electrical bulk resistance

The point-to-point bulk resistance (in ohms) of the films is measured using a standard multimeter across contact points situated about 1 inch apart. Where resistivities are quoted in ohms/square, two spots of silver paste having a diameter of about 0.3 mm are applied to the surface of the film about 1 inch apart. The resistance across these points is also measured using a standard multimeter and the reading is divided by 10 to calculate the resistivity in ohms/square. Results given as a single number are an average of several measurements and results given as a range of figures indicate the high and low readings from several measurements.

### Peel Resistance

The films are tested for resistance to peeling by firmly applying a piece of 3M Scotch® tape 232 to a portion of a printed film that includes at least one edge of the film. The tape is pulled off the film rapidly and the adhesive underside of the tape is checked for peeling. The peel resistance of the film is assessed as follows: excellent is no transfer of film to the tape; very good is a few small spots of film scattered on the surface of the tape; good is a number of small spots of film on the tape; fair is a thin layer of film or a large chunk of film on the tape; poor is separation of the film from the substrate or removal of a large of a large portion of the film. In some cases no cohesive film adhered to the substrate is formed.

### Scratch Resistance

A fingernail is drawn back and forth across the surface of the film five times. The surface of the film where it was scratched and the tip of the nail are examined and the scratch resistance of the film is assessed as follows: excellent is no noticeable transfer of the film surface to the nail; very good is minimal transfer and no noticeable indentation on the surface of the film; good is some indentation of the film surface; fair is removal of a substantial portion of the film; and poor is where the substrate is visible. In some cases no cohesive film adhered to the substrate is formed.

### Sample preparation methods

The components of the examples and comparative examples are combined using the following techniques and apparatus:
-- Ball mill BM: A Union Process 01 HDDM vertical grinding mill.
-- Ball mill E: An Eiger Mini 250 Type M250-VSE-TEFV horizontal grinding mill.
-- Ball mill DB: A vertical stainless steel vertical grinding mill having four stainless steel arms situated 90° away from each other. The mill is driven by a compressed air motor and has a bottom discharge valve.
-- High shear mixer: A homogenizer having a roto-stator overhead stirrer.

### Ingredients used in the formulations:

Polyamide refers to Versamid 750, a low melting point polyamide manufactured by Cognis.

Lecithin A refers to Lecithin 10-023 manufactured by Wintersun Chemical, Ontario, CA. Lecithin B refers to Lecithin LE102, supplied by Spectrum Chemical Corp.

BYK-ES80 refers to BYK-ES80, an alkylolammonium salt of an unsaturated acidic carboxylic acid ester manufactured by BYK USA, Wallingford, Conn.

PANI refers to a polyaniline emeraldine salt having a number average molecular weight of about 15,000 and a particle size of 3-100 microns that is supplied by Aldrich.

Electron refers to a citrus terpene-based solvent manufactured by Ecolink, Tucker, GA.

Carbon nanotubes refers to 30-50 nm OD multi-walled carbon nanotubes supplied by Cheap Tubes Inc.

Conductive carbon black refers to Ketjen Black, manufactured by Akzo-Nobel.

Silver powder refers to silver powder having an average particle of size of 300-1000 nm (47MR-02C, manufactured by Inframat Advanced Materials, Farmington, Conn).

Indium tin oxide refers to 90% indium(III) oxide/10% tin(IV) oxide nanopowder manufactured by Inframat Advanced Materials, Farmington, Conn.

Dimethylsiloxane/vinylmethylsiloxane copolymer refers to 7.5% vinylmethylsiloxane copolymer with dimethylsiloxane, PS424-KG, manufactured by UCT Specialties LLC, Bristol, Penna.

Butyl titanium phosphate refers to Vertec IA10, manufactured by Johnson-Matthey Catalysts, Billingham, UK.

Silver powder refers to silver powder having an average particle of size of 300-1000 nm (47MR-02C, manufactured by Inframat Advanced Materials, Farmington, Conn).

### Examples 1 to 7 and Comparative Examples 1 to 5

A mixture comprising about 16 weight percent polyamide, about 4 weight percent graphene sheets having a carbon to oxygen molar ratio of about 100:1, and about 80 weight percent isopropyl alcohol is mixed in ball mill E at 5000 rpm and 100 °F for 1.5 hours using a grinding medium comprising 212 mL of 5% yttrium stabilized 0.3 mm zirconium oxide.

In each example or comparative example ten grams of the resulting dispersion is removed. In some cases (identified in Table 1) one or more of the following is added to the 10 gram sample: 0.2 grams of lecithin, 0.2 grams of BYK-ES80, or 2 grams of a 10 weight percent solution of PANI in chloroform. The mixture is then further blended for about a minute using the high shear mixture.

The resulting dispersions are printed as a film onto one of the following substrates: thermally stabilized poly(ethylene terephthalate) (PET) (TS PET), PET coated with indium tin oxide (PET/ITO), PET coated for digital printing (PET-dig. printing), or poly(lactic acid) (PLA) (see Table 1). The scratch and peel resistance is tested for each film and the results are given in Table 1. ("Excellent" is abbreviated as "ex." and very good is abbreviated as "v. good" in the table.)

**Table 1**

| | Comp. Ex. 1 | Comp. Ex. 2 | Ex. 1 | Ex. 2 | Ex. 3 | Ex. 4 | Comp. Ex. 3 | Comp. Ex. 4 | Comp. Ex. 5 | Ex. 5 | Ex. 6 | Ex. 7 |
|---|---|---|---|---|---|---|---|---|---|---|---|---|
| Lecithin B | -- | -- | Y | Y | Y | Y | -- | -- | -- | Y | Y | Y |
| BYK-ES80 | -- | Y | -- | -- | -- | -- | -- | -- | Y | -- | -- | Y |
| PANI | -- | -- | -- | -- | -- | -- | -- | Y | -- | -- | Y | -- |
| | | | | | | | | | | | | |
| Substrate | TS PET | TS PET | TS PET | PET/ ITO | PET-dig. print | PLA | TS PET | TS PET | TS PET | TS PET | TS PET | TS PET |
| Scratch resistance | Excel. | v. good | v. good | good | good | good | ex. | ex. | ex. | ex. | | |
| Peel resistance | excell. | v. good | v. good | poor | poor | poor/ fair | ex. | ex. | ex. | ex. | | |
| Bulk electrical resistivity (Ω/sq.) | 15 | 12 | 9 | 9 | 65-80 | 40 | 18-23 | 13-15 | 15-25 | 15 | 12 | 9-11 |

### Comparative Examples 6 to 8 and Example 8

Graphene sheets having a carbon to oxygen ratio of approximately 50:1 (4 weight percent), dimethylsiloxane/vinylmethylsiloxane copolymer (16 weight percent), and Electron (80 weight percent) are combined in ball mill DB and blended at 300 rpm for 8 hours without cooling using 3/16" stainless steel balls as the grinding medium.

The resulting dispersion is diluted from 20 weight percent solids to 10 weight percent solids with Electron. Four 10 g aliquots are removed. An additive (0.1 g) is added to three of them (see Table 2). Dicumyl peroxide (99%, 0.81 g) is added to each aliquot, which is then blended for about a minute using the high shear mixer. The dispersion is then spread onto a silicone rubber substrate that is cured in a vacuum oven at 250 °C and 100 inHg for 2 hours. After curing, the surface scratch and peel resistance and bulk resistivity of the resulting film are measured. The results are given in Table 2.

**Table 2**

| Graphene sheets | Additive | Scratch resistance | Peel resistance | Bulk electrical resistance (kΩ) |
|---|---|---|---|---|
| Comp. Ex. 6 | None | Very good | Good/very good | 0.26 |
| Comp. Ex. 7 | BYK-ES80 | Good | Fair/good | 0.4 |
| Comp. Ex. 8 | PANI | Good | Fair | 0.46 |
| Example 8 | Lecithin A | Very good | Good/very good | 0.15 |

### Comparative Examples 9 to 11 and Example 9

Carbon nanotubes (10 weight percent), dimethylsiloxane/vinylmethylsiloxane copolymer (40 weight percent), and Electron (50 weight percent) are combined in ball mill DB and blended at 300 rpm for 8 hours without cooling using five pounds of 3/16" stainless steel balls as the grinding medium.

The resulting dispersion is diluted from 50 weight percent solids to 30 weight percent solids with Electron. Four 10 g aliquots are removed. An additive (0.1 g) is added to three of them (see Table 3). Dicumyl peroxide (99%, 2.42 g) is added to each aliquot, which is then blended for about a minute using the high shear mixer. The dispersion is then spread onto a silicone rubber substrate that is cured in a vacuum oven at 250 °C and 100 inHg for 2 hours. After curing, the surface scratch and peel resistance and bulk resistivity of the resulting film are measured. The results are given in Table 3.

**Table 3**

| Carbon nanotubes | Additive | Scratch resistance | Peel resistance | Bulk electrical resistance (kΩ) |
|---|---|---|---|---|
| Comp. Ex. 9 | None | Good | Very good | 1.2 |
| Comp. Ex. 10 | BYK-ES80 | Good/very good | Good/very good | 0.6 |
| Comp. Ex. 11 | PANI | Very good | Good/very good | 0.3 |
| Example 9 | Lecithin A | Very good | Good/very good | 1 |

### Comparative Examples 12 to 14 and Example 10

Conductive carbon black (10 weight percent), dimethylsiloxane/vinylmethylsiloxane copolymer (40 weight percent), and Electron (50 weight percent) are combined in ball mill DB and blended at 300 rpm for 8 hours using five pounds of 3/16" stainless steel balls as the grinding medium.

The resulting dispersion is diluted from 50 weight percent solids to 38.5 weight percent solids with Electron. Four 10 g aliquots are removed. An additive (0.1 g) is added to three of them (see Table 4). Dicumyl peroxide (99%, 3.11 g) is added to each aliquot, which is then blended for about a minute using the high shear mixer. The dispersion is then spread onto a silicone substrate that is cured in a vacuum oven at 250 °C and 100 inHg for 2 hours. After curing, the surface scratch and peel resistance and bulk resistivity of the resulting film are measured. The results are given in Table 4.

**Table 4**

| Carbon black | Additive | Scratch resistance | Peel resistance | Bulk electrical resistance (kΩ) |
|---|---|---|---|---|
| Comp. Ex. 12 | None | Good | Fair/good | 3 |
| Comp. Ex. 13 | BYK-ES80 | Good | Fair/good | 3.5 |
| Comp. Ex. 14 | PANI | Fair | Poor/fair | 4.5 |
| Example 10 | Lecithin A | Good/very good | Fair/good | 1 |

### Comparative Examples 15 to 18

Indium tin oxide (ITO) (30 weight percent), butyl titanium phosphate (1.25 weight percent), dimethylsiloxane/vinylmethylsiloxane copolymer (18.75 weight percent), and Electron (50 weight percent) are combined in ball mill DB and blended at 300 rpm for 8 hours using five pounds of 3/16" stainless steel balls as the grinding medium.

Four 10 g aliquots are removed from the resulting solution. An additive (0.1 g) is added to three of them (see Table 5). Dicumyl peroxide (99%, 4 g) is added to each aliquot, which is then blended for about a minute using the high shear mixer. The dispersion is then spread onto a silicone substrate that is cured in a vacuum oven at 250 °C and 100 inHg for 2 hours. After curing, the surface scratch and peel resistance and bulk resistivity of the resulting film are measured. The results are given in Table 5. The bulk resistivity is too high to be measured.

**Table 5**

| ITO | Additive | Scratch resistance | Peel resistance | Bulk electrical resistance (kΩ) |
|---|---|---|---|---|
| Comp. Ex. 15 | None | Good | Good | nm |
| Comp. Ex. 16 | BYK-ES80 | Good/very good | Good/very good | nm |
| Comp. Ex. 17 | PANI | Good/very good | Good/very good | nm |
| Comp. Ex. 18 | Lecithin A | Good/very good | Good/very good | nm |

### Comparative Examples 19 to 22

Silver powder (4 weight percent), dimethylsiloxane/vinylmethylsiloxane copolymer (16 weight percent), and Electron (80 weight percent) are combined in ball mill BM and blended at 450 rpm for 6 hours without cooling using 1800 g of 3/16" stainless steel balls.

Four aliquots are removed from the resulting dispersion. An additive (0.1 g) is added to three of them (see Table 6). Dicumyl peroxide (99%, 1.62 g) is added to each aliquot, which is then blended for about a minute using the high shear mixer. The dispersion is then spread onto a silicone substrate that is cured in a vacuum oven at 250 °C and 100 inHg for 2 hours. After curing, the surface scratch and peel resistance and bulk resistivity of the resulting coated silicone substrate are measured. No film is formed from the dispersion after curing (i.e., there is little adhesion to the substrate) and the bulk resistivity is too high to be measured. The results are summarized in Table 6.

**Table 6**

| Silver powder | Additive | Scratch resistance | Peel resistance | Bulk electrical resistance (kΩ) |
|---|---|---|---|---|
| Comp. Ex. 23 | None | no film | | nm |
| Comp. Ex. 24 | BYK-ES80 | | | nm |
| Comp. Ex. 25 | PANI | | | nm |
| Comp. Ex. 26 | Lecithin A | | | nm |

### Example 11

Lecithin B is dissolved in isopropyl alcohol with heating and an equal amount by weight of graphene sheets having a carbon to oxygen ratio of approximately 100:1 is added. The isopropyl alcohol is evaporated and the remaining solids are allowed to dry overnight in air. The graphene sheets/lecithin mixture (2 weight percent), dimethylsiloxane/vinylmethylsiloxane copolymer (16 weight percent), and Electron (80 weight percent) are combined in ball mill BM and ground at 650 rpm for 5 hours with heating followed by 1 hour with cooling. Upon discharging the mixture from the mill, it is diluted from 20 weight percent solids to 14.9 weight percent solids by the addition of more Electron.

A ten gram aliquot is removed from the resulting dispersion and dicumyl peroxide (1.2 g in a 50 percent Electron solution) is added. The resulting mixtures is then blended for about a minute using the high shear mixer and then spread onto a silicone rubber substrate that is cured in a vacuum oven at 250 °C and 100 inHg for 2 hours. After curing, the resulting film surface has good scratch resistance and fair to good peel resistance. The film has a bulk electrical resistance of 350 Ω.

## Claims

1. An ink or coating, comprising at least one polymeric binder, at least one carbonaceous filler, and at least one multi-chain lipid, **characterized in that** the carbonaceous filler comprises graphene sheets.

2. The ink or coating of claim 1, wherein the lipid comprises at least one phospholipid, preferably lecithin.

3. The ink or coating of claim 2, wherein the phospholipid comprises one or more selected from the group consisting of phosphatidylethanolamine, phosphatidylserine, phosphatidylinositol, and phospatidylglycerol.

4. The ink or coating of claim 1, wherein the lipid comprises at least one sphingolipid which preferably comprises ceramid.

5. The ink or coating of claim 1, wherein the graphene sheets have a surface area of at least about 300 m²/g.

6. The ink or coating of claim 1, wherein the graphene sheets have a carbon to oxygen molar ratio of at least about 25:1, preferably of at least about 75:1.

7. The ink or coating of claim 1 having an electrical conductivity of at least about 10⁻⁸ S/cm, preferably of at least about 10³ S/cm.

8. The ink or coating of claim 1, wherein the binder comprises at least one polysiloxane.

9. The ink or coating of claim 1, wherein the binder comprises at least one polyamide.

10. The ink or coating of claim 1, further comprising at least one carrier.

11. The ink or coating of claim 10, wherein the carrier comprises at least one citrus terpene.

12. An article onto which the ink or coating of claim 1 has been adhered.

## Patentansprüche

1. Tinte oder Beschichtung, umfassend wenigstens ein polymeres Bindemittel, wenigstens einen kohlehaltigen Füllstoff und wenigstens ein mehrkettiges Lipid, **dadurch gekennzeichnet, dass** der kohlehaltige Füllstoff Graphenblättchen umfasst.

2. Tinte oder Beschichtung gemäß Anspruch 1, wobei das Lipid wenigstens ein Phospholipid, vorzugsweise Lecithin, umfasst.

3. Tinte oder Beschichtung gemäß Anspruch 2, wobei das Phospholipid eines oder mehrere umfasst, die aus der Gruppe ausgewählt sind, die aus Phosphatidylethanolamin, Phosphatidylserin, Phosphatidylinosit und Phosphatidylglycerin besteht.

4. Tinte oder Beschichtung gemäß Anspruch 1, wobei das Lipid wenigstens ein Sphingolipid umfasst, das vorzugsweise Ceramid umfasst.

5. Tinte oder Beschichtung gemäß Anspruch 1, wobei die Graphenblättchen eine spezifische Oberfläche von wenigstens etwa 300 m²/g aufweisen.

6. Tinte oder Beschichtung gemäß Anspruch 1, wobei die Graphenblättchen ein Kohlenstoff-Sauerstoff-Stoffmengenverhältnis von wenigstens etwa 25:1, vorzugsweise wenigstens etwa 75:1, aufweisen.

7. Tinte oder Beschichtung gemäß Anspruch 1, die eine elektrische Leitfähigkeit von wenigstens etwa 10⁻⁸ S/cm, vorzugsweise wenigstens etwa 10³ S/cm, aufweist.

8. Tinte oder Beschichtung gemäß Anspruch 1, wobei das Bindemittel wenigstens ein Polysiloxan umfasst.

9. Tinte oder Beschichtung gemäß Anspruch 1, wobei das Bindemittel wenigstens ein Polyamid umfasst.

10. Tinte oder Beschichtung gemäß Anspruch 1, weiterhin umfassend wenigstens einen Träger.

11. Tinte oder Beschichtung gemäß Anspruch 10, wobei der Träger wenigstens ein Zitrusterpen umfasst.

12. Artikel, auf den die Tinte oder Beschichtung gemäß Anspruch 1 haftend aufgetragen wurde.

## Revendications

1. Encre ou revêtement, comprenant au moins un liant polymère, au moins une charge carbonée, et au moins un lipide à chaînes multiples, **caractérisé en ce que** la charge carbonée comprend des feuilles de graphène.

2. Encre ou revêtement selon la revendication 1, dans lequel ledit lipide comprend au moins un phospholipide, de préférence lécithine.

3. Encre ou revêtement selon la revendication 2, dans lequel ledit phospholipide comprend un ou plusieurs choisis dans le groupe consistant en phosphatidyléthanolamine, phosphatidylsérine, phosphatidylinositol, et phosphatidylglycérol.

4. Encre ou revêtement selon la revendication 1, dans lequel ledit lipide comprend au moins un sphingolipide, de préférence comprenant une céramide.

5. Encre ou revêtement selon la revendication 1, dans lequel lesdites feuilles de graphène présentent une surface spécifique d'au moins environ 300 m²/g.

6. Encre ou revêtement selon la revendication 1, dans lequel lesdites feuilles de graphène présentent un rapport molaire de carbone à oxygène d'au moins environ 25 : 1, de préférence d'au moins environ 75 : 1.

7. Encre ou revêtement selon la revendication 1, présentant une conductibilité électrique d'au moins environ 10⁻⁸ S/cm, de préférence d'au moins environ 10³ S/cm.

8. Encre ou revêtement selon la revendication 1, dans lequel ledit liant comprend au moins un polysiloxane.

9. Encre ou revêtement selon la revendication 1, dans lequel ledit liant comprend au moins un polyamide.

10. Encre ou revêtement selon la revendication 1, comprenant en outre au moins un véhicule.

11. Encre ou revêtement selon la revendication 10, dans lequel le véhicule comprend au moins un terpène d'agrumes.

12. Article sur lequel l'encre ou le revêtement selon la revendication 1 a été appliqué.
